# FASCICULE DE BREVET EUROPEEN

(11) **EP 2 358 211 B1**
(45) Date de publication et mention de la délivrance du brevet: **08.08.2018**
(21) Numéro de dépôt: 09752415.1
(22) Date de dépôt: 25.09.2009
(51) Int. Cl.: A23G 3/20, A23P 30/20, A23P 30/25

(54) **DISPOSITIF DE FABRICATION EN CONTINU PAR CUISSON EXTRUSION D'UN PRODUIT ALIMENTAIRE CONTENANT DES MORCEAUX ENTIERS ET SOLIDES ET MACHINE D'EXTRUSION ÉQUIPÉE D'UN TEL DISPOSITIF**
VORRICHTUNG ZUR KONTINUIERLICHEN HERSTELLUNG VON EXTRUSIONSGEKOCHTEN LEBENSMITTELN MIT GANZEN STÜCKIGEN FESTSTOFFEN, UND EXTRUDER MIT SOLCH EINER VORRICHTUNG
DEVICE FOR CONTINUOUSLY PRODUCING A FOOD PRODUCT COMPRISING COMPLETE SOLID GRANULAR BITS BY EXTRUSION COOKING, AND EXTRUDER COMPRISING SUCH A DEVICE

(30) Priorité: 06.10.2008 FR 0856743
(43) Date de publication de la demande: 24.08.2011
(73) Titulaire: Clextral, 42700 Firminy (FR)
(72) Inventeur: ASENCIO, Luis, F-42600 Savigneux (FR); BOUVIER, Jean Marie, F-69006 Lyon (FR); PERENON, Anne, F-69450 St Cyr au Mont d'Or (FR)
(74) Mandataire: Lavoix
(86) Numéro de dépôt international: PCT/FR2009/051824
(87) Numéro de publication internationale: WO 2010/040929

(56) Documents cités:
- EP-A- 0 280 484
- FR-A- 2 123 333
- US-A- 4 643 904
- US-A- 4 687 429
- US-A- 4 892 471
- US-A- 5 686 128

## Description

La présente invention concerne un dispositif de fabrication en continu par cuisson-extrusion d'un produit alimentaire coextrudé contenant des morceaux entiers et solides, comme par exemple des cacahuètes, des noix de cajou, des amandes, des noisettes ou tout autre fruit ou graine sec et entier.

On connaît des produits composites alimentaires coextrudés comportant une enveloppe externe formée par une pâte cuite à base de céréales et une garniture interne liquide, semi-liquide ou pâteuse introduite au centre de l'enveloppe externe.

Pour fabriquer ce type de produits, il est connu d'utiliser une machine d'extrusion comprenant, de manière classique au moins une vis entraînée en rotation dans un corps de forme allongée et qui effectue sur la matière première un traitement approprié par une succession d'étapes, comme par exemple de malaxage, de compression, de cisaillement et/ou de cuisson.

L'extrémité aval du fourreau de la machine d'extrusion est pourvue d'une filière par laquelle le produit alimentaire s'échappe de ladite machine d'extrusion.

La garniture intérieure de l'enveloppe externe extrudée est introduite en général grâce à une pompe dans la filière tubulaire de formation de cette enveloppe externe.

Cette garniture, liquide ou pâteuse, mais pompable, ne peut pas comporter de particules solides, ou celles-ci sont limitées à des particules de très petites dimensions noyées dans le liquide ou la pâte.

Les dispositifs connus ne permettent pas d'amener dans la filière des morceaux entiers dans leur état solide de taille importante en préservant leur intégrité de forme.

En effet, le passage dans une pompe et dans une canule d'injection si les morceaux sont dans le fourrage ou dans les vis de la machine d'extrusion et dans filière si les morceaux sont dans la pâte provoque la détérioration et l'écrasement de ces morceaux. De plus, les morceaux sont disposés sous une répartition totalement aléatoire et non à intervalles réguliers dans la pâte ou dans le fourrage.

EP-A-0 280 484 permet de fabriquer un produit alimentaire extrudé contenant des morceaux, mais ni par cuisson-extrusion, ni de manière continue. Ce document divulgue en effet une machine d'extrusion à vis, avec une pompe intégrée qui fonctionne en discontinu pour pousser la pâte. Un obturateur, intégré avant la sortie de la machine d'extrusion, empêche la pâte de s'écouler pendant qu'un morceau d'aliment tombe dans la pâte en amont de l'obturateur. La solution de EP-A-0 280 484 s'avère ainsi complexe de par la conception de sa machine d'extrusion à fonctionnement cyclique.

L'invention a pour but de proposer un dispositif permettant de fabriquer en continu par cuisson-extrusion un produit alimentaire contenant des morceaux entiers et solides, même en l'absence de produit de fourrage, d'enrobage ou de convoyage.

L'invention a donc pour objet un dispositif de fabrication en continu par cuisson-extrusion d'un produit alimentaire coextrudé contenant des morceaux entiers et solides, tel que défini à la revendication 1.

D'autres caractéristiques de l'invention sont spécifiées aux revendications dépendantes.

L'invention et ses avantages seront mieux compris à la lecture de la description qui va suivre, donnée à titre d'exemple et faite en référence aux dessins annexés, sur lesquels :
- la Fig. 1 est une vue schématique en perspective d'un dispositif de fabrication en continu par cuisson-extrusion d'un produit alimentaire contenant des morceaux entiers et solides, conforme à l'invention,
- la Fig. 2 est une vue schématique en coupe axiale du dispositif de fabrication, conforme à l'invention, et
- la Fig. 3 est une vue schématique des vis de convoyage des morceaux entiers et solides équipant le dispositif de fabrication, conforme à l'invention.

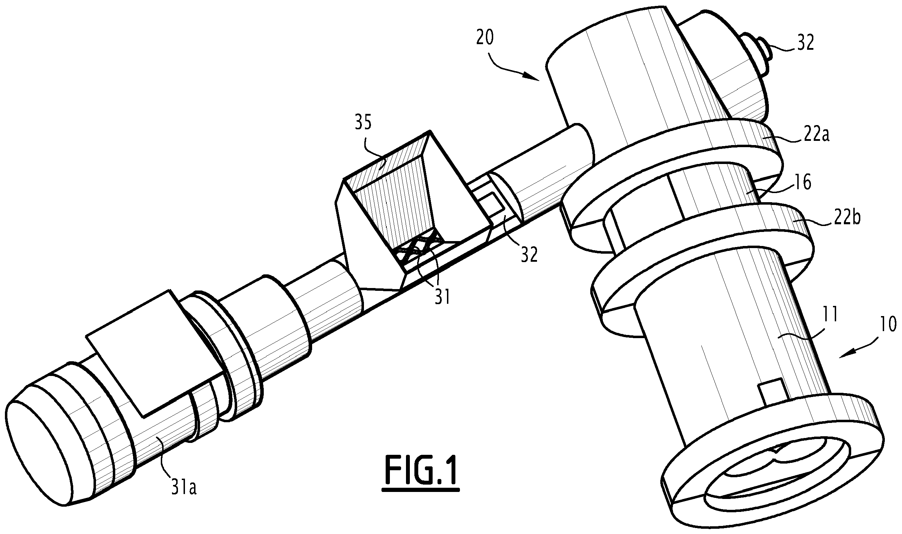

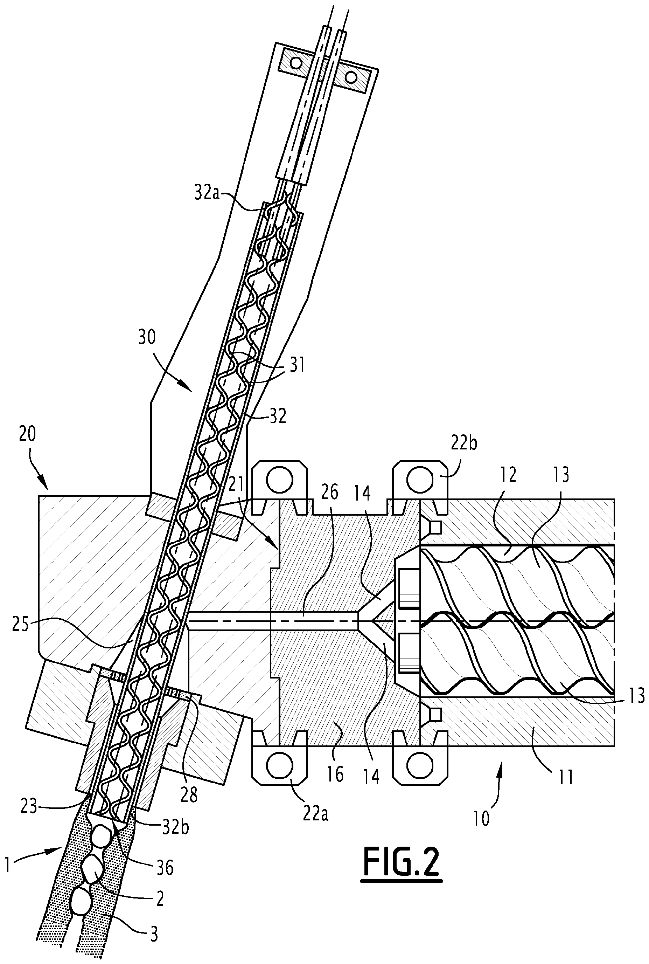

Sur les Figs. 1 et 2, on a représenté schématiquement et partiellement une machine d'extrusion désignée dans son ensemble par la référence 10 pour la préparation d'un produit alimentaire 1 contenant à intervalles réguliers des morceaux 2 entiers et solides, disposés dans une enveloppe externe 3 formée par exemple par une pâte cuite à base de céréales.

De manière classique, la machine d'extrusion 10 comporte un corps creux qui présente la forme d'un fourreau allongé 11 et qui délimite une chambre interne 12.

Dans cette chambre 12 est montée au moins une vis 13 longitudinale rotative de traitement, comme par exemple de compression, de malaxage et/ou de cisaillement d'au moins une matière première à base de céréales par exemple. Ladite au moins vis 13 est accouplée à des moyens d'entraînement en rotation, connus et non représentés.

Dans l'exemple de réalisation représenté sur les figures, la machine d'extrusion 10 est équipée, dans la chambre 12, de deux vis 13 co-rotatives et co-pénétrantes.

Ainsi que montré à la Fig. 2, la matière sort de la machine d'extrusion sous la forme de deux flux par deux orifices de sortie 14.

L'extrémité aval de sortie du fourreau 11 par rapport au sens d'écoulement de la matière est obturée par une pièce d'adaptation 16 qui réunit les flux de matière des deux orifices 14 dans un conduit de sortie 26 par lequel s'échappe la matière après son traitement dans la chambre 12 du fourreau 11 au moyen des vis de traitement 13.

Cette pièce d'adaptation 16 est pourvue au niveau du conduit de sortie 26 du produit alimentaire, d'une filière d'extrusion désignée par la référence générale 20.

Cette filière d'extrusion 20 est munie d'une face d'appui 21 sur l'extrémité de sortie de la pièce d'adaptation 16 du fourreau 11 et est fixée sur cette extrémité par l'intermédiaire par exemple d'une bride 22a ou par l'intermédiaire de tout autre organe approprié et de type connu. La pièce d'adaptation 16 est fixée sur l'extrémité du fourreau 1 au moyen par exemple d'une bride 22b ou à l'aide de tout autre moyen.

La filière d'extrusion 20 est pourvue d'un alésage 23 de formation d'un cordon continu du produit alimentaire 1 selon une direction présentant un angle par rapport à l'axe de la machine d'extrusion 10, ainsi que montré sur les Figs. 1 et 2.

A cet effet, la filière d'extrusion 20 comporte une chambre interne 25 communiquant avec le conduit de sortie 26 disposé dans l'axe dudit fourreau 11.

La chambre interne 25 communique avec l'alésage 23, comme montré à la Fig. 2.

La chambre interne 25 peut comporter une grille 28 dans le but d'améliorer l'orientation du flux de la matière extrudée.

Le dispositif de fabrication en continu du produit alimentaire 1 contenant des morceaux 2 entiers et solides, comprend, directement à la sortie de la filière 20 et dans l'axe de l'alésage 23 de formation du cordon continu du produit alimentaire 1, des moyens 30 d'incorporation directement et à intervalles réguliers desdits morceaux 2 à l'intérieur de l'enveloppe externe 3 du produit alimentaire 1.

Les morceaux 2 incorporés à l'intérieur de l'enveloppe externe 3 sont identiques aux morceaux introduits à l'entrée des moyens 30 d'incorporation et ne subissent aucune modification de leurs dimensions.

Ces moyens d'incorporation sont formés par au moins une vis de convoyage 31 et, de préférence, par deux vis de convoyage 31 parallèles et identiques.

Selon une variante, les moyens 30 d'incorporation peuvent être formés par deux vis de convoyage 31 se terminant par une vis de convoyage.

Ainsi que représenté sur les figures, les moyens 30 d'incorporation sont formés par deux vis de convoyage 31 parallèles et identiques.

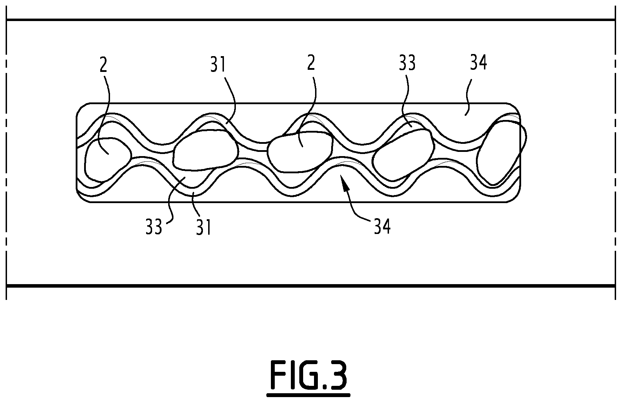

Les vis de convoyage 31 sont formées par des vis de type à ressort, disposées dans un tube 32 et entraînées en rotation en sens inverse l'une par rapport à l'autre par un moteur 31a (Fig. 1) de type approprié. Ces vis 31 ménagent entre elles des alvéoles 33 de transport des morceaux entiers et solides 2 les uns à la suite des autres. Le tube 32 des vis de convoyage 31 comporte une première extrémité 32a munie d'une ouverture longitudinale 34 (Fig. 3) coiffée d'une trémie 35 (Fig. 1) d'alimentation des morceaux 2 et une seconde extrémité 32b munie d'un orifice axial 36 qui, débouche directement au niveau de la sortie du produit alimentaire de la filière 20.

Les vis de convoyage 31 sont dimensionnées en fonction des morceaux 2 entiers et solides pour véhiculer lesdits morceaux 2 les uns indépendamment des autres. Le débit de ces morceaux 2 au niveau de l'orifice axial 36 de sortie du tube 32 est indépendant du débit de la matière extrudée et il peut être réglé par action sur la vitesse de rotation desdites vis de convoyage 31.

La matière première à base par exemple de céréales est introduite dans la machine d'extrusion 10 où elle subit, à l'intérieur du fourreau 11 par ladite au moins vis 13, un travail mécanique approprié par une succession d'étapes, comme par exemple de malaxage, de compression, de cisaillement et/ou de cuisson.

La pâte ainsi obtenue à la sortie de la machine d'extrusion 20 est introduite dans le conduit de sortie 26, puis dans la chambre interne 25 de la filière d'extrusion 20.

Cette pâte passe sous une pression élevée dans l'alésage 23 autour du tube 32 de façon à former à la sortie de la filière 20, un cordon continu et tubulaire s'étendant selon une direction présentant un angle par rapport à l'axe du fourreau 11 de la machine d'extrusion.

Les morceaux 2 sont déversés dans la trémie 35 et ils remplissent les alvéoles 33 ménagées entre les vis 31, les unes à la suite des autres et ces morceaux 2 sont véhiculés, du fait de la rotation des vis 31 en sens inverse, dans le tube 32 jusqu'à l'orifice axial 36.

Ces morceaux 2 sont déposés les uns à la suite des autres et à intervalles réguliers dans le cordon continu afin de former le produit alimentaire 1 qui se compose de l'enveloppe externe 3 et de morceaux 2 entiers et solides régulièrement répartis à l'intérieur.

Le circuit destiné à la pâte qui est constitué par la machine d'extrusion 10, le conduit de sortie 26 et l'alésage 23 est indépendant du circuit destiné aux morceaux 2 qui est constitué par les vis de convoyage 31 et le tube 32.

D'une manière générale, chaque morceau 2 a des dimensions comprises entre 2 et 30 mm et le rapport entre la plus grande dimension et la plus petite dimension de chaque morceau est compris entre 1 et 8.

Ces morceaux 2 par exemple de forme sphérique ou ovoïde sont solides ou semi-solides à température ambiante.

Les morceaux 2 destinés à l'alimentation humaine ou animale sont formés par exemple par des fruits secs, par exemple raisins, cacahuètes, noix de cajou, amandes, noisettes ou tout autre fruit ou graine sec et entier ou encore par des morceaux de fromage, de viande séchée, de réglisse, de chocolat ou par des bonbons.

A la sortie de la filière 20, le produit alimentaire obtenu peut être expansé ou non.

Ce produit alimentaire qui se présente sous la forme d'un biscuit tubulaire et extrudé peut être laminé et éventuellement coupé après sa sortie de la filière 20 pour former des petits coussinets fermés de biscuit contenant des morceaux entiers et solides. Ces coussinets après laminage sans coupe peuvent également ensuite être séparés après un début de durcissement.

Le produit alimentaire à la sortie de la filière peut s'expanser et se refermer sur les morceaux entiers et solides en les enrobant

Selon un autre mode de réalisation, le dispositif peut être associé à des moyens, comme par exemple une pompe, d'injection d'une pâte de fourrage pour la réalisation d'un produit alimentaire coextrudé comportant un biscuit extérieur contenant lesdits morceaux entiers et solides noyés dans ladite pâte de fourrage. La pâte de fourrage est par exemple une pâte de chocolat avec des noisettes ou une pâte de fruit avec des morceaux du même fruit.

Selon différents modes de réalisation, la pâte de fourrage peut être injectée à différents emplacements suivant la viscosité de ladite pâte, de l'adhérence et de la taille des morceaux ou encore suivant d'autres facteurs.

Ainsi, le fourrage peut être introduit en même temps que les morceaux dans ladite au moins vis de convoyage.

Selon une variante, la pâte de fourrage est injectée dans ladite au moins vis de convoyage après l'introduction des morceaux dans cette vis. La pâte est injectée par exemple par une pompe.

Selon encore une autre variante, la pâte de fourrage est injectée directement dans la filière de la machine d'extrusion au moyen d'une canule et d'une pompe.

Le dispositif selon l'invention permet par des moyens simples à mettre en oeuvre et peu onéreux, de fabriquer en continu par cuisson-extrusion un produit alimentaire contenant des morceaux entiers et solides.

## Revendications

1. Dispositif de fabrication en continu par cuisson-extrusion d'un produit alimentaire (1) coextrudé contenant des morceaux (2) entiers et solides, de dimensions comprises entre 2 et 30 mm, du type comprenant une machine d'extrusion (10) comportant, d'une part, un fourreau (11) allongé contenant au moins une vis de traitement (13) d'au moins une matière première et entraînée en rotation à l'intérieur dudit fourreau (11) et, d'autre part, un filière d'extrusion (20) munie d'une face d'appui (21) sur une extrémité de sortie dudit fourreau, ladite filière d'extrusion étant pourvue d'un alésage (23) de formation d'un cordon continu tubulaire du produit alimentaire (1) selon une direction faisant un angle avec l'axe de la machine d'extrusion (10), **caractérisé en ce qu'**il comprend, directement à la sortie de la filière (20) et dans l'axe de l'alésage (23) de formation du cordon continu, des moyens (30) d'incorporation directement et à intervalles réguliers desdits morceaux (2) entiers et solides sans modification de leurs dimensions initiales dans le cordon continu de produit alimentaire (1).

2. Dispositif selon la revendication 1, **caractérisé en ce que** les moyens (30) d'incorporation sont formés par au moins une vis de convoyage (31), disposée dans un tube (32) et ménageant avec le tube (32) des alvéoles de transport des morceaux (2) entiers et solides les uns à la suite des autres.

3. Dispositif selon la revendication 1 ou 2, **caractérisé en ce que** les moyens (30) d'incorporation sont formés par deux vis de convoyage (31) parallèles, disposées dans un tube (32) et entraînées en rotation en sens inverse l'une par rapport à l'autre, lesdites vis (31) ménageant entre elles des alvéoles (33) de transport des morceaux (2) entiers et solides les uns à la suite des autres.

4. Dispositif selon la revendication 2 ou 3, **caractérisé en ce que** le tube (32) de ladite au moins vis de convoyage (31) comporte une première extrémité (32a) munie d'une ouverture (34) longitudinale coiffée d'une trémie (35) d'alimentation des morceaux (2) entiers et solides et une seconde extrémité (32b) munie d'un orifice axial (36) de sortie desdits morceaux (2) d'un alésage (33) de formation du cordon continu de produit alimentaire (1).

5. Dispositif selon l'une quelconque des revendications 2 à 4, **caractérisé en ce que** ladite au moins vis de convoyage (31) est dimensionnée en fonction des morceaux (2) entiers et solides pour véhiculer lesdits morceaux (2) les uns indépendamment des autres.

6. Dispositif selon l'une quelconque des revendications 1 à 5, **caractérisé en ce que** le débit des morceaux (2) entiers et solides au niveau de l'orifice axial (36) de sortie du tube (32) est indépendant du débit de la matière extrudé.

7. Dispositif selon l'une quelconque des revendications 2 à 6, **caractérisé en ce que** le débit des morceaux (2) entiers et solides au niveau de l'orifice axial (36) de sortie du tube (32) est réglable par action sur la vitesse de rotation de ladite au moins vis de convoyage (31).

8. Dispositif selon l'une quelconque des revendications 2 à 7, **caractérisé en ce que** ladite au moins vis de convoyage (31) est formée par une vis de type à ressort.

9. Dispositif selon l'une quelconque des revendications 1 à 8, **caractérisé en ce qu'**il comporte des moyens d'injection d'une pâte de fourrage pour la réalisation d'un produit alimentaire coextrudé comportant un biscuit extérieur contenant lesdits morceaux entiers et solides noyés dans ladite pâte de fourrage.

## Patentansprüche

1. Vorrichtung zur kontinuierlichen Herstellung via Extrudier-Kochen eines koextrudierten Lebensmittelprodukts (1), das ganze feste Stücke (2) mit Abmessungen zwischen 2 und 30 mm enthält, des Typs aufweisend eine Extruder-Maschine (10), die aufweist, einerseits, eine langgestreckte Hülse (11), die wenigstens eine Schnecke zur Verarbeitung (13) wenigstens eines ersten Materials, die drehangetrieben ist, enthält im Inneren der besagten Hülse (11), und, andererseits, ein Extrudier-Kanalteil (20), das versehen ist mit einer Anschlagfläche (21) an einem Ausgangsende der besagten Hülse, wobei das besagte Extrudier-Kanalteil mit einer Bohrung (23) versehen ist zur Ausbildung einer kontinuierlichen rohrförmigen Schnur von dem Lebensmittelprodukt (1) entlang einer Richtung, die einen Winkel bildet mit der Achse der Extruder-Maschine (10), **dadurch gekennzeichnet, dass** sie aufweist, direkt am Ausgang des Kanalteils (20) und in der Achse der Bohrung (23) zur Ausbildung der kontinuierlichen Schnur, Mittel (30) zur direkten Einbringung der besagten ganzen festen Stücke (2) in die kontinuierliche Schnur von dem Lebensmittelprodukt (1) in regelmäßigen Abständen, ohne Modifikation deren anfänglichen Abmessungen.

2. Vorrichtung gemäß Anspruch 1, **dadurch gekennzeichnet, dass** die Mittel (30) zur Einbringung durch wenigstens eine Förderschnecke (31) gebildet ist, die in einem Rohr (32) angeordnet ist und die mit dem Rohr (32) Alveolen herbeiführt zum aufeinanderfolgenden Transport der ganzen festen Stücke (2) .

3. Vorrichtung gemäß Anspruch 1 oder 2, **dadurch gekennzeichnet, dass** die Mittel (30) zur Einbringung gebildet sind durch zwei parallele Förderschnecken (31), die in einem Rohr (32) angeordnet sind und die relativ zueinander gegensinnig drehangetrieben werden, wobei die besagten Schnecken (31) zwischen sich Alveolen (33) herbeiführen zum aufeinanderfolgenden Transport der ganzen festen Stücke (2).

4. Vorrichtung gemäß Anspruch 2 oder 3, **dadurch gekennzeichnet, dass** das Rohr (32) der besagten wenigstens einen Förderschnecke (31) aufweist ein erstes Ende (32a), das mit einer Längs-Öffnung (34) versehen ist, auf die ein Fülltrichter (35) aufgesetzt ist zur Zuführung der ganzen festen Stücke (2), und ein zweites Ende (32b), das versehen ist mit einer Axialöffnung (36) zur Ausgabe der besagten Stücke (2) bei einer Bohrung (33) zur Ausbildung einer kontinuierlichen Schnur von dem Lebensmittelprodukt (1).

5. Vorrichtung gemäß irgendeinem der Ansprüche 2 bis 4, **dadurch gekennzeichnet, dass** die besagte wenigstens eine Förderschnecke (31) in Abhängigkeit von den festen ganzen Stücken (2) dimensioniert ist zum Transportieren der Stücke (2) unabhängig voneinander.

6. Vorrichtung gemäß irgendeinem der Ansprüche 1 bis 5, **dadurch gekennzeichnet, dass** der Durchsatz von ganzen festen Stücken (2) bezüglich der Ausgabe-Axialöffnung (36) des Rohrs (32) unabhängig ist von dem Durchsatz des extrudierten Materials.

7. Vorrichtung gemäß irgendeinem der Ansprüche 2 bis 6, **dadurch gekennzeichnet, dass** der Durchsatz von ganzen festen Stücken (2) bezüglich der Ausgabe-Axialöffnung (36) des Rohrs (32) einstellbar ist via Beeinflussung der Drehgeschwindigkeit der besagten wenigstens einen Förderschnecke (31).

8. Vorrichtung gemäß irgendeinem der Ansprüche 2 bis 7, **dadurch gekennzeichnet, dass** die besagte wenigstens eine Förderschnecke (31) durch eine Schnecke des Feder-Typs gebildet ist.

9. Vorrichtung gemäß irgendeinem der Ansprüche 1 bis 8, **dadurch gekennzeichnet, dass** sie aufweist Mittel zum Einspritzen einer Füllungs-Paste für die Realisierung eines koextrudierten Lebensmittelprodukts, das ein äußeres Backwerk aufweist, in welchem enthalten sind die besagten ganzen festen Stücke, die in der besagten Füllungs-Paste eingebettet sind.

## Claims

1. A device for continuous production by extrusion cooking of a co-extruded food product (1) containing whole solid pieces (2), with dimensions comprised between 2 and 30 mm, of the type comprising an extrusion machine (10) comprising both an elongated cylinder (11), containing at least one screw (13) for processing at least one starting material and driven in rotation inside said cylinder (11), and an extrusion die (20) provided with a contact face (21) at an outlet end of said cylinder, said extrusion die being provided with a bore (23) for forming a continuous tubular string of the food product (1) in a direction forming an angle with the axis of the extrusion machine (10), **characterized in that** it comprises, directly at the outlet of the die (20) and in the axis of the bore (23) for forming the continuous string, means (30) for directly incorporating at regular intervals said whole solid pieces (2) without altering the initial dimensions thereof inside the continuous string of food product (1).

2. The device according to claim 1, **characterized in that** the incorporating means (30) are made of at least one transfer screw (31), arranged inside a tube (32) and creating with the tube (32) cells for successively transporting the whole solid pieces (2).

3. The device according to claim 1 or 2, **characterized in that** the incorporating means (30) are made of two parallel transfer screws (31), arranged inside a tube (32) and driven in rotation in the opposite direction to the other, said screws (31) creating therebetween cells (33) for successively transporting the whole solid pieces (2).

4. The device according to claim 2 or 3, **characterized in that** the tube (32) of said at least one transfer screw (31) comprises a first end (32a) provided with a longitudinal opening (34) topped with a hopper (35) for feeding the whole solid pieces (2) and a second end (32b) provided with an axial outlet orifice (36) of said pieces (2) of a bore (33) for forming the continuous string of food product (1).

5. The device according to any of claims 2 to 4, **characterized in that** said at least one transfer screw (31) is sized depending on the whole solid pieces (2) for conveying said pieces (2) independently from each other.

6. The device according to any of claims 1 to 5, **characterized in that** the throughput of the whole solid pieces (2) at the axial outlet orifice (36) of the tube (32) is independent from the throughput of the extruded material.

7. The device according to any of claims 2 to 6, **characterized in that** the throughput of the whole solid pieces (2) at the axial outlet orifice (36) of the tube (32) can be adjusted by influencing the rotation speed of said at least one transfer screw (31).

8. The device according to any of claims 2 to 7, **characterized in that** said at least one transfer screw (31) is made of a spring-loaded screw.

9. The device according to any of claims 1 to 8, **characterized in that** it comprises means for injecting a stuffing paste for making a co-extruded food product comprising an outer biscuit containing said whole solid pieces embedded within said stuffing paste.
